# EUROPÄISCHE PATENTSCHRIFT

(11) **EP 0 846 249 B1**
(45) Veröffentlichungstag und Bekanntmachung des Hinweises auf die Patenterteilung: **08.11.2000**
(21) Anmeldenummer: 96929194.7
(22) Anmeldetag: 01.08.1996
(51) Int. Cl.: G01B 11/30

(54) **VORRICHTUNG UND VERFAHREN ZUM VERMESSEN VON ZWEI EINANDER GEGENÜBERLIEGENDEN OBERFLÄCHEN EINES KÖRPERS**
DEVICE AND PROCESS FOR MEASURING TWO OPPOSITE SURFACES OF A BODY
PROCEDE ET DISPOSITIF POUR MESURER DEUX SURFACES OPPOSEES D'UN CORPS

(30) Priorität: 24.01.1996 DE 19602445
(43) Veröffentlichungstag der Anmeldung: 10.06.1998
(73) Patentinhaber: Nanopro Luftlager- Produktions- und Messtechnik GmbH, 79111 Freiburg (DE)
(72) Erfinder: MÜLLER, Dieter, D-79589 Binzen (DE)
(74) Vertreter: Prüfer, Lutz H., Dipl.-Phys.
(86) Internationale Anmeldenummer: EP9603381
(87) Internationale Veröffentlichungsnummer: WO9727452

(56) Entgegenhaltungen:
- EP-A- 0 179 935
- WO-A-96/22505
- DD-A- 106 769

## Beschreibung

Die Erfindung betrifft eine Vorrichtung und ein Verfahren zum Vermessen von zwei einander gegenüberliegenden im wesentlichen ebenen Oberflächen eines Körpers nach den Patentansprüchen 1 bzw. 20.

Der technische Fortschritt in der Halbleiterindustrie führte in den vergangenen Jahren dazu, daß aus wirtschaftlichen und prozeßtechnischen Gründen die Durchmesser der Halbleiter-Wafer, die ein Ausgangsprodukt bei der Chip-Herstellung sind, sprunghaft vergrößert wurden. Wafer mit einem Durchmesser von 200 Millimeter sind bereits Standard, Wafer mit einem Durchmesser von 300 Millimeter werden demnächst verarbeitet werden.

Hersteller und Verarbeiter dieser Wafergrößen verfügen heute noch nicht über Meßgeräte, mit deren Hilfe besondere Qualitätsmerkmale wie die Geometrie (Ebenheit, Biegung, Dickenvariation) der Wafer mit der erforderlichen Auflösung und Genauigkeit kontrolliert werden können.

Es sind zwei Meßverfahren zur Vermessung der Geometrie von Halbleiter-Wafern bekannt. Das eine Meßverfahren ist eine optische Geometriemessung mit Hilfe von Interferometrie. Dabei wird eine ganzflächige interferometrische Messung einer Oberfläche des Wafers durchgeführt, während dieser auf einer ebenen Platte ruht oder darauf angesaugt wird. Wenn die eine Oberfläche des Wafers vermessen ist, wird dieser umgedreht und anschließend die andere Oberfläche vermessen. Bei diesem Verfahren ist, da immer nur eine Seite gemessen werden kann, der Bezug zwischen Wafer-Vorder- und Rückseite, der eine Aussage über die Parallelität und die Dickenschwankung macht, nicht direkt gegeben. Man geht davon aus, daß die angesaugte Seite absolut eben gezogen wird, was in der Praxis jedoch nicht der Fall ist, da Partikel zwischen Wafer und Auflage dies verhindern und zu dem generell Unsicherheit darüber besteht, ob der Wafer - speziell bei Unebenheit - gleichmäßig anliegt. Ferner verbiegt bei einem horizontal ruhenden Wafer mit Durchmesser 200 Millimeter oder 300 Millimeter die Schwerkraft diesen, und somit liegt kein kräftefreier Zustand des Wafers vor. Dies macht eine Messung der absoluten Ebenheit unmöglich. Ferner birgt der Flächenkontakt zur Auflage und eventuell auch zur Meßoptik ein so hohes Beschädigungsrisiko, daß meistens nur Stichprobenmessungen zugelassen werden. Durch die Summe der vielen Meßunsicherheiten ist die Meßgenauigkeit nicht ausreichend. Meßwerte, die mit anderen Verfahren erzeugt worden sind, sind auch nicht direkt vergleichbar.

Ein weiteres Verfahren ist die kapazitive Geometriemessung, welche ein Abscannen der Oberfläche mit Abstandsensoren beinhaltet. Dabei tasten punktförmig messende Abstandsensoren die Vorder- und Rückseite eines Wafers ab. Der Wafer wird dabei im Zentrum gehalten und gedreht. Da die Messung punktförmig erfolgt muß gescannt werden, um Flächendaten zu erhalten. Die bekannten Nachteile von Scannverfahren, z.B. instabile Meßbedingungen über den gesamten Abtastvorgang, schränken dabei die Meßgenauigkeit erheblich ein. Durch das zentrale Halten des Wafers bei der Messung wirkt sich die Schwerkraft stark auf die Form des Wafers aus, indem sie eine Biegung verursacht. Dieser Einfluß kann rechnerisch in nur ungenügender Annäherung berücksichtigt werden. Ferner ist die Anzahl der Meßpunkte, die innerhalb einer akzeptablen Zeit erhalten werden können, zu gering. Die verfahrensbedingte bzw. durch den Sensordurchmesser bedingte Größe der Meßpunkte kann auch nicht soweit reduziert werden, wie es für die neuen Qualitätsbestimmungen notwendig ist. Ferner ist das Beschädigungsrisiko für die Wafer hoch, da ein Flächenkontakt besteht und der Abstand der Sensoren zur Waferoberfläche aus technischen Gründen sehr gering ist. Insgesamt ist auch hier die Meßgenauigkeit durch die Summe der Meßunsicherheiten zu gering. Auch hier sind Meßwerte, die mit anderen Verfahren erzeugt wurden, nicht direkt vergleichbar.

Aus der am 25. Juli 1996 veröffentlichten internationalen Anmeldung WO 96/22505 ist eine Vorrichtung zum Vermessen von einer gekrümmten Oberfläche eines Körpers bekannt. Diese Vorrichtung weist eine Lichtquelle zur Abgabe eines Lichtstrahlbündels, eine Positioniereinrichtung zum Positionieren des Körpers in den Strahlengang des Lichtstrahlbündels, eine zwischen der Lichtquelle und der Position des Körpers angeordnete Strahlteilereinrichtung zum Aufteilen des Lichtstrahlbündels zum Abzweigen eines auf die zu vermessende Fläche unter einem Winkel auftreffenden und an der Fläche reflektierten Teilstrahlbündels aus dem Lichtstrahlbündel und eine Detektoreinrichtung zum Erzeugen eines Interferenzbildes zwischen dem Lichtstrahlbündel und dem reflektierten Teilstrahlbündel auf.

Aus der DD 106 769 ist eine Vorrichtung zum Vermessen einer gekrümmten Oberfläche eines Körpers bekannt. Die Vorrichtung weist eine Lichtquelle zur Abgabe eines Lichtstrahlbündels auf. Die zu vermessende Oberfläche ist im Strahlengang des Lichtstrahlbündels positioniert. Die Vorrichtung weist ferner eine zwischen der Lichtquelle und der Position des Körpers angeordnete Strahlteilereinrichtung zum Aufteilen des Lichtstrahlbündels zum Abzweigen eines auf die zu vermessende Oberfläche unter einem Winkel auftreffenden und an der Fläche reflektierten Teilstrahlbündels aus dem Lichtstrahlbündel auf und eine Detektoreinrichtung zum Erzeugen eines Interferenzbildes zwischen dem Lichtstrahlbündel und dem reflektierten Teilstrahlbündel.

Es ist Aufgabe der Erfindung, eine Vorrichtung und ein Verfahren zum Vermessen von zwei einander gegenüberliegenden im wesentlichen ebenen und zueinander parallelen Flächen eines Körpers, insbesondere eines Halbleiter-Wafers bereitzustellen, mit dem bzw. mit der die Meßgenauigkeit erhöht, das Beschädigungsrisiko verringert und die Meßzeit reduziert werden können.

Die Aufgabe wird gelöst durch eine Vorrichtung nach Patentanspruch 1 bzw. ein Verfahren nach Patentanspruch 20.

Weiterbildungen der Erfindung sind in den abhängigen Ansprüchen angegeben.

Die Vorrichtung bzw. das Verfahren weist folgende Vorteile auf:
Die Messung der Vorder- und Rückseite erfolgt unter absolut gleichen Bedingungen berührungslos, zeitgleich und statisches findet keine Waferbewegung statt - und es wird nur ein Sensor verwendet. Dabei ist keine Abstimmungskalibrierung notwendig. Der Wafer ist bei der Messung frei von äußerer Krafteinwirkung, da er aufrecht steht. Die kritischen Flächen der Wafer werden nie berüht, damit ergibt sich ein geringes Beschädigungsrisiko. Aus einer einzigen Messung ergeben sich alle erforderlichen Geometriedaten. Durch die einzige Messung wird die Meßzeit wesentlich reduziert, wodurch ein höherer Durchsatz erreicht wird und die Rentabilität gesteigert wird. Die Meßgenauigkeit und die Auflösung sowohl lateral, als auch vertikal, sind so groß oder noch höher wie es in internationalen Standards verlangt wird. Ferner erfaßt das Verfahren den Wafer in einem unbeeinflußten Zustand und könnte dadurch zum Standard werden.

Weitere Merkmale und Zweckmäßigkeiten der Erfindung ergeben sich aus der Beschreibung eines Ausführungsbeispieles anhand der Figuren.

Von den Figuren zeigen:
- Fig. 1: eine schematische Darstellung der Vorrichtung;
- Fig. 2: eine Draufsicht der Vorrichtung mit dem Strahlengang; und
- Fig. 3: ein Blockdiagramm der Auswerte- und Bedienungseinheit.

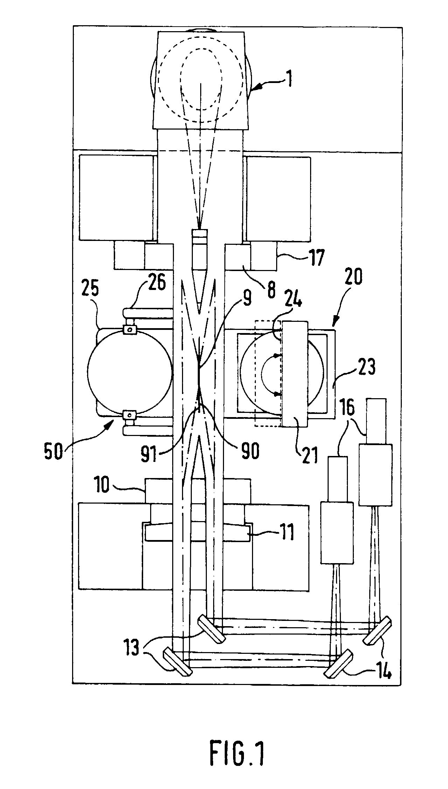

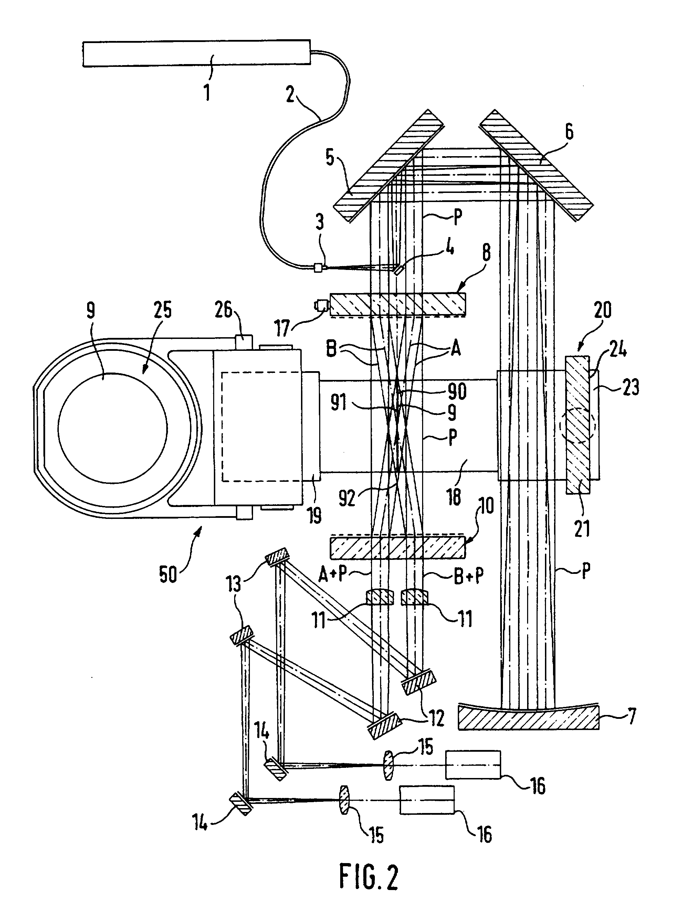

Wie aus den Figuren 1 und 2 ersichtlich ist, weist die Vorrichtung eine Lichtquelle in Form eines Lasers 1 auf. Über einen Lichtwellenleiter 2 wird das von dem Laser 1 ausgesandte Licht an eine definierte Stelle der Vorrichtung geführt. An einem Ende 3 des Lichtwellenleiters 2 tritt das von dem Laser 1 erzeugte Licht aus, so daß das Ende 3 als eine punktförmige Lichtquelle wirkt. Das austretende Licht trifft auf einen Umlenkspiegel 4, von dem aus es über zwei weitere in einem Winkel von 90° zueinander stehende Umlenkspiegel 5 und 6 auf einen Kollimationsspiegel 7 in Form eines Parabolspiegels umgelenkt wird. Das von dem Parabolspiegel 7 reflektierte parallele Lichtbündel P gelangt über die beiden Umlenkspiegel 5 und 6 auf einen Strahlteiler 8. Dieser ist als ein erstes Beugungsgitter ausgebildet und ist vorzugsweise ein Phasengitter. Der Strahlteiler 8 ist in der Vorrichtung in vertikaler Richtung angeordnet, und das parallele Strahlenbündel P trifft senkrecht auf das Beugungsgitter auf. In einem Abstand zu und parallel zu diesem ist ein Strahlsammler 10 in Form eines zweiten Beugungsgitters angeordnet. Hinter dem Strahlsammler 10 sind in gleicher Höhe zwei Dekollimationslinsen 11 vorgesehen, von denen aus die aus diesen austretenden Lichtstrahlbündel jeweils über Umlenkspiegel 12, 13, 14 und eine Abbildungsoptik 15 auf zwei CCD-Kameras 16 abgelenkt und fokussiert werden.

Der Strahlteiler 8 ist quer zur optischen Achse gelagert und umfaßt ferner ein piezoelektrisches Stellglied 17 zum Verschieben der Phase des parallelen Lichtstrahlbündels P durch Verschieben des Beugungsgitters.

In der Mitte zwischen dem ersten Beugungsgitter und dem zweiten Beugungsgitter ist eine Haltevorrichtung 50 beispielsweise in Form eines Ständers vorgesehen, auf dem ein zu messender Wafer 9 so gehalten wird, daß seine beiden ebenen Oberflächen 90, 91 in vertikaler Richtung parallel zum Strahlenbündel P angeordnet sind. Der Wafer 9 wird dabei durch den Ständer im wesentlichen nur an seinem vertikalen Rand 92 gestützt, so daß die beiden Oberflächen 90, 91 durch den Ständer im wesentlichen nicht berührt werden und einer Interferometriemessung frei zugänglich sind.

Es ist ferner eine Aufnahmevorrichtung 50, 25 für den zu vermessenden Wafer 9 vorgesehen, in welche der Wafer horizontal liegend eingelegt werden kann. Mit Hilfe einer Kippvorrichtung 26 kann der Wafer 9 von seiner liegenden Position in die stehende Meßposition gekippt werden und mittels eines positionierbaren Schlittens so in den Strahlengang zwischen dem ersten Beugungsgitter und dem zweiten Beugungsgitter eingebracht werden, daß die zu vermessenden Oberflächen 90, 91 im wesentlichen parallel zum ungebeugten Lichtstrahlbündel P und im wesentlichen in vertikaler Richtung ausgerichtet sind.

Es ist ferner eine Referenzeinrichtung 20 vorgesehen, welche einen Referenzkörper 21 aufweist, der mindestens eine ebene Oberfläche 24 besitzt. Der Referenzkörper 21 kann über einen Schlitten 23 mit einer Linearführung 18 in den Strahlengang zwischen dem ersten Beugungsgitter 8 und dem zweiten Beugungsgitter 10 anstelle des zu messenden Halbleiter-Wafers 9 eingebracht werden. Dabei ist der Referenzkörper 21 so gehalten, daß seine ebene Oberfläche 24 in vertikaler Richtung parallel zu dem ungebeugten Strahlenbündel P angeordnet ist. Der Referenzkörper 21 ist in seiner Halterung um eine Achse parallel zu seiner Oberfläche 24 um 180° drehbar.

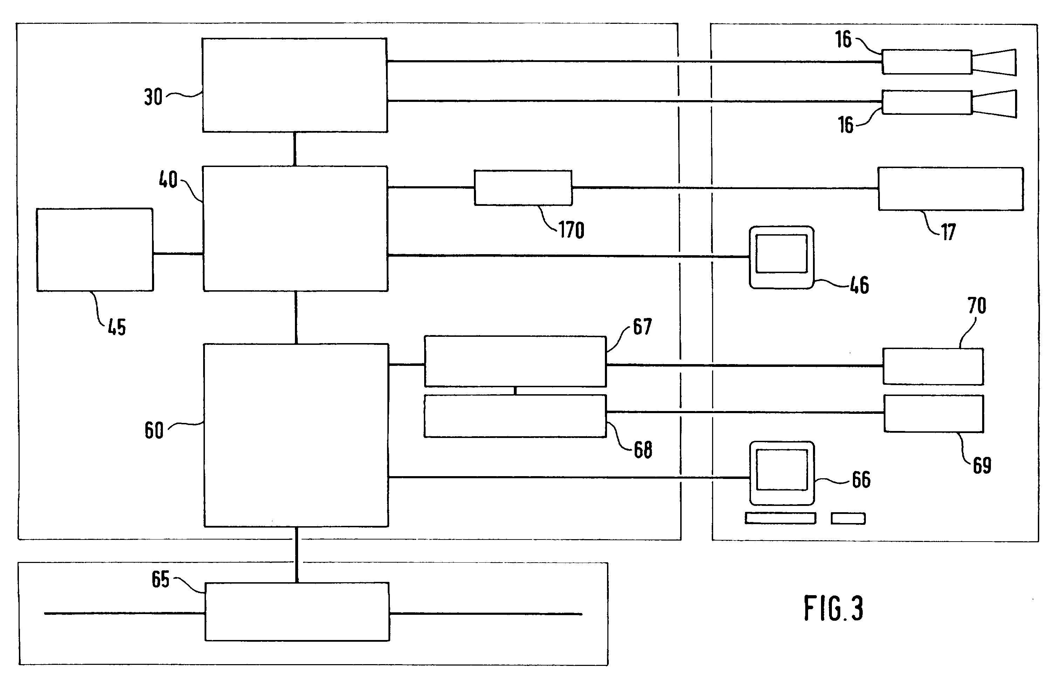

Wie insbesondere aus Fig. 3 ersichtlich ist, weist die Vorrichtung ferner eine mit den Ausgängen der CCD-Kameras verbundene elektronische Einrichtung 30 zur Bildverarbeitung der von den CCD-Kameras erzeugten Interferenzbilder auf. Die Einrichtung 30 zur Bildverarbeitung ist mit einem Auswerterechner 40 verbunden. Der Auswerterechner 40 ist ferner über ein Piezodrive-Element 170 mit dem Phasenschieber 17 verbunden. An den Auswerterechner 40 sind ein Drucker 45 und ein Videomonitor 46 zur Ausgabe von Daten angeschlossen. Der Auswerterechner 40 ist ferner mit einer Leit- und Steuerungseinheit 60 verbunden, welche ihrerseits wiederum mit einem Hostrechner 65, einem Bedienerterminal 66 und dem Ausgang einer SPS (speicherprogrammierbare Steuerung) und Positioniersteuerung verbunden ist. Eingänge der SPS und Positioniersteuerung sind jeweils mit einer Leistungselektronik 68 für die Motoren 69 der Schlitten für den zu vermessenden Halbleiter-Wafer bzw. den Referenzkörper oder für sonstige zu bewegende mechanische Teile der Vorrichtung verbunden. Ein anderer Eingang der SPS und Positioniersteuerung 67 ist mit Sensorelementen 70 für die Schlitten bzw. Kippeinrichtungen verbunden.

Im Betrieb wird der zu messende Wafer 9 zunächst in die Waferaufnahmeeinrichtung 25 eingelegt. Dabei sind die zu vermessenden Oberflächen 90, 91 des Wafers 9 horizontal angeordnet. Mittels der Kippvorrichtung und des Schlittens 19 wird der zu messende Wafer 9 in die Haltevorrichtung 50 eingebracht, in der er so angeordnet wird, daß seine zu vermessenden Oberflächen 90, 91 vertikal angeordnet sind. Von dem auf das erste Beugungsgitter 8 des Strahlteilers auftreffenden parallelen Lichtstrahlbündel P werden durch Beugung am Gitter Teilstrahlenbündel A, B erzeugt, wobei das Teilstrahlenbündel A mit positivem Beugungswinkel auf die eine Oberfläche 90 des Wafers auftreffen und dort reflektiert wird, während das Teilstrahlenbündel B mit negativem Beugungswinkel auf die andere Oberfläche 91 des Wafers auftrifft und dort reflektiert wird. Die nullte Beugungsordnung des parallelen Lichtstrahlbündels P geht durch das erste Beugungsgitter 8 hindurch und wird an den Oberflächen 90, 91 des Wafers 9 nicht reflektiert. Dieses Teilstrahlbündel P dient als Referenzstrahl, mit dem die reflektierten Wellenfronten der Bündel A bzw. B zur Interferenz gebracht werden. In dem zweiten Beugungsgitter 10, dem Strahlsammler werden die reflektierten Teilstrahlbündel A bzw. B jeweils wieder mit dem Referenzstrahl P der nullten Beugungsordnung zusammengeführt und als zwei Teilstrahlbündel A + P bzw. B + P über Dekollimationslinsen 11 und Umlenkspiegel 12, 13 und 14 sowie Sammellinsen 15 auf die Brennebenen der CCD-Kameras 16 fokussiert.

Während der Belichtung der Oberflächen wird die Phase des parallelen Lichtstrahlbündels P mittels des Phasenschiebers 17 mehrfach um 90° bzw. 120° durch Bewegung des Beugungsgitters verschoben. Dadurch werden phasenverschobene Interferenzbilder erzeugt. Die Ausgangsdaten der CCD-Kameras 16 werden der Bildverarbeitungseinrichtung 30 zugeführt, welche aus den einzelnen Interferenzbildern der CCD-Kameras 16 digitalisierte Phasenbilder 160 für jede gemessene Oberfläche 90, 91 erzeugt. Die digitalisierten Phasenbilder 160 werden in dem Auswerterechner 40 weiterverarbeitet und auf dem Videomonitor 46 abgebildet. Die über den Phasenschieber 17 erzeugte definierte Änderung der Interferenzphase wird ausgewertet, um so zu bestimmen, ob es sich um eine Erhebung oder eine Absenkung in den gemessenen Oberflächen 90, 91 handelt. Zur Bestimmung der Parallelität der gemessenen Flächen 90, 91 werden die beiden digitalisierten Phasenbilder voneinander subtrahiert. In dem Auswerterechner wird ferner eine Maskengenerierung, Kalibrierung, Parametrisierung und eine Speicherung von Phasenbildern durchgeführt. Erzeugte Grafiken und Tabellen können über den Drucker 45 ausgegeben werden.

Vor jeder Messung eines Wafers 9 kann eine Kalibrierung mittels des Referenzkörpers 21 durchgeführt werden. Dabei wird der Referenzkörper 21 in den Strahlengang zwischen das erste Beugungsgitter 8 und das zweite Beugungsgitter 10 eingebracht und die bekannte ebene Oberfläche 24 vermessen. Anschließend wird der Referenzkörper 21 um 180° gedreht und die selbe Oberfläche 24 als zweite Oberfläche gemessen.

Abwandlungen der Vorrichtung und des Verfahrens sind möglich. Als Referenzkörper 21 kann auch ein Körper mit zwei exakt planparallelen Oberflächen verwendet werden, die beide gleichzeitig vermessen werden. Die Ausführungsform mit nur einer ebenen Fläche des Referenzkörpers ist jedoch zweckmäßiger.

## Patentansprüche

1. Vorrichtung zum Vermessen von zwei einander gegenüberliegenden im wesentlichen ebenen Oberflächen eines Körpers mit
einer Lichtquelle (1) zur Abgabe eines Lichtstrahlbündels;
einer Positioniereinrichtung (25, 19, 50) zum Positionieren des Körpers (9) in den Strahlengang des Lichtstrahlbündels (P);
einer zwischen der Lichtquelle (1) und der Position des Körpers (9) angeordneten Strahlteilereinrichtung (8) zum Aufteilen des Lichtstrahlbündels (P) zum Abzweigen eines auf eine der zu vermessenden Flächen (90, 91), unter einem Winkel auftreffenden und an der Fläche reflektierten Teilstrahlbündel (A, B) aus dem Lichtstrahlbündel (P) und
einer Detektoreinrichtung (16) zum Erzeugen eines Interferenzbildes zwischen dem Lichtstrahlbündel (P) und dem reflektierten Teilstrahlbündel (A, B),
dadurch gekennzeichnet, daß die Positioniereinrichtung (25, 19, 50) eine Haltevorrichtung (50) aufweist, die den Körper (9) derart unterstützt, daß die zu vermessenden Oberflächen (90, 91) im wesentlichen parallel zu dem Lichtstrahlbündel (P) angeordnet sind und im wesentlichen vertikal ausgerichtet sind und der Messung frei zugänglich sind und daß gleichzeitig ein erstes, auf die erste Fläche (90) auftreffendes Teilstrahlbündel (A) und ein zweites, auf die zweite Fläche (91) auftreffendes Teilstrahlbündel (B) erzeugt wird.

2. Vorrichtung nach Anspruch 1, dadurch gekennzeichnet, daß die Haltevorrichtung (50) eine Vorrichtung zum Aufstellen des Körpers (9) in den Strahlengang umfaßt.

3. Vorrichtung nach Anspruch 1 oder 2, dadurch gekennzeichnet, daß die Strahlteilereinrichtung (8) ein im Strahlengang angeordnetes Beugungsgitter umfaßt, wobei das erste, auf die erste Fläche (90) auftreffende Teilstrahlbündel (A) Wellen mit positivem Beugungswinkel und das zweite, auf die zweite Fläche (91) auftreffende Teilstrahlbündel (B) Wellen mit negativem Beugungswinkel umfaßt.

4. Vorrichtung nach einem der Ansprüche 1 bis 3, dadurch gekennzeichnet, daß eine Kalibriereinrichtung (20) mit einem Referenzkörper (21), der mindestens eine ebene Oberfläche (24) aufweist, vorgesehen ist.

5. Vorrichtung nach Anspruch 4, dadurch gekennzeichnet, daß die Kalibriereinrichtung (20) eine Positioniereinrichtung (23, 18) zum Positionieren des Referenzkörpers (21) anstelle des zu vermessenden Körpers (9) in den Strahlengang aufweist, wobei die ebene Fläche (24) vertikal angeordnet ist.

6. Vorrichtung nach Anspruch 5, dadurch gekennzeichnet, daß die Positioniereinrichtung (20) einen Schlitten (23) zum Positionieren des Referenzkörpers (21) in den Strahlengang aufweist.

7. Vorrichtung nach einem der Ansprüche 4 bis 6, dadurch gekennzeichnet, daß die Kalibriereinrichtung (21) eine Einrichtung zum Drehen des Körpers um eine Achse parallel zu der ebenen Fläche (24) um 180° aufweist.

8. Vorrichtung nach einem der Ansprüche 1 bis 7, dadurch gekennzeichnet, daß eine Aufnahmeeinrichtung (25) für den zu vermessenden Körper (9) vorgesehen ist, in die der Körper so eingebracht werden kann, daß seine zu messenden Oberflächen (90, 91) im wesentlichen horizontal angeordnet sind und daß ferner eine Kippvorrichtung (26) vorgesehen ist zum Kippen des Körpers in seine Meßstellung.

9. Vorrichtung nach einem der Ansprüche 1 bis 8, dadurch gekennzeichnet, daß die Detektoreinrichtung (16) zwei Detektoren (16) aufweist, wobei die Detektoren jeweils die Interferenz des an der zu vermessenden Fläche (90, 91) abgelenkten Teilstrahlbündels (A, B) zu dem Referenzstrahlbündel (P) messen.

10. Vorrichtung nach Anspruch 9, dadurch gekennzeichnet, daß die Detektoren (16) als CCD-Kameras ausgebildet sind.

11. Vorrichtung nach Anspruch 9 oder 10, gekennzeichnet durch eine Bildverarbeitungseinrichtung (30) zum Erzeugen von digitalisierten Phasenbildern (160) aus den von jedem Detektor (16) gemessenen Interferenzen für jede zu vermessende Fläche (90, 91).

12. Vorrichtung nach Anspruch 11, gekennzeichnet durch eine Auswerteeinrichtung (40) zum Auswerten der Phasenbilder (160).

13. Vorrichtung nach einem der Ansprüche 1 bis 12, gekennzeichnet durch einen Phasenschieber (17) zum Ändern der Phase des Lichtstrahlbündels (P) um einen definierten Wert.

14. Vorrichtung nach einem der Ansprüche 1 bis 13, gekennzeichnet durch einen im Strahlengang zwischen der Position des Körpers (9) und der Detektoreinrichtung (16) angeordneten Strahlsammler (10).

15. Vorrichtung nach Anspruch 14, dadurch gekennzeichnet, daß der Strahlsammler (10) als Beugungsgitter ausgebildet ist.

16. Vorrichtung nach einem der Ansprüche 1 bis 15, dadurch gekennzeichnet, daß ein Parabolspiegel (7) zum Erzeugen eines parallelen Strahlenbündels (P) aus dem aus der Strahlungsquelle (1) austretenden Lichtstrahls vorgesehen ist.

17. Vorrichtung nach einem der Ansprüche 1 bis 16, dadurch gekennzeichnet, daß die Lichtquelle (1) als Laser ausgebildet ist.

18. Vorrichtung nach einem der Ansprüche 13 bis 17, dadurch gekennzeichnet, daß der Phasenschieber (17) ein piezoelektrisches Stellglied zum Verschieben des Beugungsgitters des Strahlteilers (8) umfaßt.

19. Vorrichtung nach einem der Ansprüche 1 bis 18, gekennzeichnet durch eine Steuereinrichtung (60) zum Steuern der Positioniereinrichtungen (22, 19, 50) für den zu messenden Körper (9) und den Referenzkörper (21).

20. Verfahren zum Vermessen von zwei einander gegenüberliegenden im wesentlichen ebenen Oberflächen (90, 91) eines Halbleiter-Wafers (9), wobei jede Oberfläche (90, 91) mittels Interferenz zwischen einem aus einer Lichtquelle (1) ausgesandten und an der Oberfläche (90, 91) reflektierten Lichtstrahlbündels (A, B) und einem aus der Lichtquelle (1) ausgesandten und im wesentlichen parallel zu der Oberfläche (90, 91) verlaufenden Lichtstrahlbündels (P) vermessen wird, und bei dem eine Lichtquelle (1) zum Vermessen beider Oberflächen (90, 91) verwendet wird und der Körper (9) im Strahlengang der Lichtquelle (1) so angeordnet wird, daß die beiden zu messenden Oberflächen (90, 91) gleichzeitig der Interferenzmessung zugänglich sind.

21. Verfahren nach Anspruch 20, bei dem der Halbleiter-Wafer (9) im Strahlengang so angeordnet wird, daß die zu vermessenden Oberflächen (90, 91) im wesentlichen in vertikaler Richtung ausgerichtet sind.

22. Verfahren nach Anspruch 20 oder 21, bei dem der Lichtstrahl aus der Lichtquelle (1) mittels eines Strahlteilers (8) in drei Teilstrahlbündel (A, B, P) aufgeteilt wird, wobei zwei der Teilstrahlbündel (A, B) jeweils auf eine der zu vermessenen Flächen (90, 91) abgelenkt und dort reflektiert werden und das dritte Teilstrahlbündel (P) als Referenzstrahl für die Interferenzmessung verwendet wird.

23. Verfahren nach Anspruch 22, bei dem die auf die zu vermessenden Oberflächen auftreffenden Teilstrahlbündel (A, B) durch Beugung an einem Gitter erzeugt werden, wobei das Teilstrahlbündel (A) mit positivem Beugungswinkel zur Vermessung der einen Oberfläche (90) und das Teilstrahlbündel (B) mit negativem Beugungswinkel zur Vermessung der anderen Oberfläche (91) verwendet wird und das Teilstrahlbündel mit Beugungswinkel Null als Referenzstrahl (P) verwendet wird.

24. Verfahren nach einem der Ansprüche 20 bis 23, bei dem von jeder zu vermessenden Oberfläche (90, 91) mehrere phasenverschobene Interferenzbilder (160) erzeugt werden.

25. Verfahren nach Anspruch 24, bei dem die Phasenbilder (160) digitalisiert werden.

26. Verfahren nach einem der Ansprüche 20 bis 25, bei dem mittels eines Phasenschiebers (17) die Phase der Teilstrahlbündel (A, B, P) beim Vermessen um einen definierten Phasenwinkel verschoben wird zum Erzeugen bewegter Phasenbilder zum Feststellen von Erhebungen oder Absenkungen in den zu vermessenden Oberflächen (90, 91).

27. Verfahren nach einem der Ansprüche 24 bis 26, bei dem die Phasenbilder (160) der beiden Oberflächen (90, 91) voneinander subtrahiert werden zum Bestimmen der Parallelität der Oberflächen (90, 91).

28. Verfahren nach einem der Ansprüche 20 bis 27, bei dem eine Kalibrierungsmessung durchgeführt wird, wobei ein Referenzkörper (21) mit mindestens einer ebenen Oberfläche (24) in die Meßposition gebracht wird und die ebene Oberfläche (24) vermessen wird.

29. Verfahren nach Anspruch 28, bei dem der Referenzkörper (21) um 180° um eine Achse parallel zu der ebenen Oberfläche (24) gedreht wird und dieselbe Oberfläche (24) nochmals vermessen wird.

30. Verfahren nach einem der Ansprüche 20 bis 29, bei dem eine einzige Lichtquelle (1) verwendet wird.

## Claims

1. Apparatus for measuring two mutually opposite substantially plane surfaces of a body having
a light source (1) for emitting a light beam;
a positioning device (25, 19, 50) for positioning the body (9) into the beam path of the light beam (P);
a beam-splitter device (8), arranged between the light source (1) and the position of the body (9), for splitting the light beam (P) for the purpose of branching off from the light beam (P) a partial beam (A, B) which strikes at an angle one of the surfaces (90, 91) to be measured and is reflected at the surface and
a detector device (16) for generating an interference pattern between the light beam (P) and the reflected partial beam (A, B), characterized in that the positioning device (25, 19, 50) has a holding device (50) which supports the body (9) in such a way that the surfaces (90, 91) to be measured are arranged substantially parallel to the light beam (P) and are oriented substantially vertically and are freely accessible for the measurement and in that a first partial beam (A) which strikes the first surface (90) and a second partial beam (B) which strikes the second surface (91) are simultaneously generated.

2. Apparatus according to Claim 1, characterized in that the holding device (50) comprises a device for putting the body (9) upright into the beam path.

3. Apparatus according to Claim 1 or 2, characterized in that the beam-splitter device (8) comprises a diffraction grating arranged in the beam path, the first partial beam (A) which strikes the first surface (90) comprising waves with a positive diffraction angle and the second partial beam (B) which strikes the second surface (91) comprising waves with a negative diffraction angle.

4. Apparatus according to one of Claims 1 to 3, characterized in that a calibrating device (20) with a reference body (21) which has at least one plane surface (24) is provided.

5. Apparatus according to Claim 4, characterized in that the calibrating device (20) has a positioning device (23, 18) for positioning the reference body (21), instead of the body (9) to be measured, into the beam path, the plane surface (24) being arranged vertically.

6. Apparatus according to Claim 5, characterized in that the positioning device (20) has a slide (23) for positioning the reference body (21) into the beam path.

7. Apparatus according to one of Claims 4 to 6, characterized in that the calibrating device (21) has a device for rotating the body through 180° about an axis parallel to the plane surface (24).

8. Apparatus according to one of Claims 1 to 7, characterized in that a receiving device (25) for the body (9) to be measured is provided, into which receiving device the body can be put in such a way that its surfaces (90, 91) to be measured are arranged substantially horizontally, and in that a tilting device (26) is further provided for tilting the body into its measurement position.

9. Apparatus according to one of Claims 1 to 8, characterized in that the detector device (16) has two detectors (16), the detectors in each case measuring the interference of the partial beam (A, B) deflected at the surface (90, 91) to be measured, with respect to the reference beam (P).

10. Apparatus according to Claim 9, characterized in that the detectors (16) are designed as CCD cameras.

11. Apparatus according to Claim 9 or 10, characterized by an image-processing device (30) for generating digitized phase images (160) from the interferences measured by each detector (16) for each surface (90, 91) to be measured.

12. Apparatus according to Claim 11, characterized by an evaluation device (40) for evaluating the phase images (160).

13. Apparatus according to one of Claims 1 to 12, characterized by a phase shifter (17) for changing the phase of the light beam (P) by a defined value.

14. Apparatus according to one of Claims 1 to 13, characterized by a beam collector (10) arranged in the beam path between the position of the body (9) and the detector device (16).

15. Apparatus according to Claim 14, characterized in that the beam collector (10) is designed as a diffraction grating.

16. Apparatus according to one of Claims 1 to 15, characterized in that a parabolic mirror (7) for generating a parallel beam (P) from the light beam emerging from the radiation source (1) is provided.

17. Apparatus according to one of Claims 1 to 16, characterized in that the light source (1) is designed as a laser.

18. Apparatus according to one of Claims 13 to 17, characterized in that the phase shifter (17) comprises a piezoelectric actuator for displacing the diffraction grating of the beam splitter (8).

19. Apparatus according to one of Claims 1 to 18, characterized by a control device (60) for controlling the positioning devices (22, 19, 50) for the body (9) to be measured and the reference body (21).

20. Method for measuring two mutually opposite substantially plane surfaces (90, 91) of a semiconductor wafer (9), wherein each surface (90, 91) is measured by means of interference between a light beam (A, B) emitted from a light source (1) and reflected at the surface (90, 91) and a light beam (P) emitted from the light source (1) and running substantially parallel to the surface (90, 91), and in which one light source (1) is used to measure both surfaces (90, 91) and the body (9) is arranged in the beam path of the light source (1) in such a way that the two surfaces (90, 91) to be measured are simultaneously accessible for the interference measurement.

21. Method according to Claim 20, in which the semiconductor wafer (9) is arranged in the beam path in such a way that the surfaces (90, 91) to be measured are oriented substantially in the vertical direction.

22. Method according to Claim 20 or 21, in which the light beam from the light source (1) is split into three partial beams (A, B, P) by means of a beam splitter (8), two of the partial beams (A, B) in each case being deflected onto one of the surfaces (90, 91) to be measured and reflected thereat and the third partial beam (P) being used as a reference beam for the interference measurement.

23. Method according to Claim 22, in which the partial beams (A, B) which strike the surfaces to be measured are produced by diffraction at a grating, the partial beam (A) with a positive diffraction angle being used for measuring the one surface (90) and the partial beam (B) with a negative diffraction angle being used for measuring the other surface (91) and the partial beam with a zero diffraction angle being used as the reference beam (P).

24. Method according to one of Claims 20 to 23, in which a plurality of phase-shifted interference patterns (160) of each surface (90, 91) to be measured are generated.

25. Method according to Claim 24, in which the phase images (160) are digitized.

26. Method according to one of Claims 20 to 25, in which a phase shifter (17) is used to shift the phase of the partial beams (A, B, P) by a defined phase angle during measurement for the purpose of generating moved phase images for detecting elevations or depressions in the surfaces (90, 91) to be measured.

27. Method according to one of Claims 24 to 26, in which the phase images (160) of the two surfaces (90, 91) are subtracted from one another for determining the parallelism of the surfaces (90, 91).

28. Method according to one of Claims 20 to 27, in which a calibrating measurement is carried out, wherein a reference body (21) is brought by at least one plane surface (24) into the measurement position and the plane surface (24) is measured.

29. Method according to Claim 28, in which the reference body (21) is rotated through 180° about an axis parallel to the plane surface (24) and the same surface (24) is measured again.

30. Method according to one of Claims 20 to 29, in which a single light source (1) is used.

## Revendications

1. Dispositif pour mesurer des surfaces opposées essentiellement planes d'un corps comprenant
une source lumineuse (1) pour l'émission d'un faisceau de rayons lumineux ;
un dispositif de positionnement (25, 19, 50) pour positionner le corps (9) dans la trajectoire des rayons du faisceau de rayons lumineux (P) ;
un dispositif séparateur de faisceaux (8) disposé entre la source lumineuse (1) et la position du corps (9) pour partager le faisceau de rayons lumineux (P) pour dévier sur une des surfaces (90, 91) à mesurer sous un angle incident un faisceau de rayons lumineux (A, B) réfléchi à la surface à partir d'un faisceau de rayons lumineux (P) et
un dispositif détecteur (16) pour produire une image d'interférence entre le faisceau de rayons lumineux (P) et le faisceau de rayons partiel réfléchi (A, B),
caractérisé en ce que le dispositif de positionnement (25, 19, 50) comprend un dispositif de maintien (50) qui supporte le corps (9) de manière à ce que les surfaces à mesurer (90, 91) soient disposées essentiellement de manière parallèle par rapport au faisceau de rayons lumineux (P) et soient dirigées essentiellement de manière verticale et soient librement accessibles et en ce que simultanément un premier faisceau de rayons partiel (A) incident est produit sur la première surface (90) et un deuxième faisceau de rayons partiel (B) incident est produit sur la deuxième surface (91).

2. Dispositif selon la revendication 1, caractérisé en ce que le dispositif de maintien (50) comprend un dispositif pour placer le corps (9) dans la trajectoire des rayons.

3. Dispositif selon la revendication 1 ou 2, caractérisé en ce que le dispositif séparateur de faisceaux (8) comprend un réseau de diffraction disposé à l'intérieur de la trajectoire des rayons d'ou il résulte que le premier faisceau de rayons partiel (A) incident sur la première surface (90) comprend des ondes présentant un angle de diffraction positif et le deuxième faisceau de rayons partiel (B) incident sur la deuxième surface (91) comprend des ondes présentant un angle de diffraction négatif.

4. Dispositif selon l'une quelconque des revendications 1 à 3, caractérisé en ce qu'un dispositif d'étalonnage (20) pourvu d'un corps de référence (21) est prévu, qui comprend au moins une surface (24) plane.

5. Dispositif selon la revendication 4, caractérisé en ce que le dispositif d'étalonnage (20) comprend un dispositif de positionnement (23, 18) pour positionner le corps de référence (21) à la place du corps (9) qui doit être mesurer à l'intérieur de la trajectoire des rayons, d'où il résulte que la surface (24) plane est disposée de manière verticale.

6. Dispositif selon la revendication 5, caractérisé en ce que le dispositif de positionnement (20) comprend un chariot (23) pour positionner le corps de référence (21) à l'intérieur de la trajectoire des rayons.

7. Dispositif selon l'une quelconque des revendications 4 à 6, caractérisé en ce que le dispositif d'étalonnage (21) comprend un dispositif pour faire tourner sur 180° le corps autour d'un axe parallèlement à la surface (24) plane.

8. Dispositif selon l'une quelconque des revendications 1 à 7, caractérisé en ce qu'un dispositif de réception (25) destiné au corps (9) à mesurer est prévu, dans lequel le corps peut être amené de sorte que ses surfaces (90,91) à mesurer sont disposées essentiellement de manière horizontale et en ce qu'en outre, un dispositif de basculement (26) est prévu pour basculer le corps dans la position de mesure.

9. Dispositif selon l'une quelconque des revendications 1 à 8, caractérisé en ce que le dispositif détecteur (16) comporte deux détecteurs (16) d'où il résulte que les détecteurs mesurent chacun l'interférence du faisceau de rayons partiel (A, B) sur la surface (90,91) qui doit être mesurer par rapport au faisceau de rayons de référence (P).

10. Dispositif selon la revendication 9, caractérisé en ce que les détecteurs (16) sont réalisés sous forme de caméras-DTC.

11. Dispositif selon la revendication 9 ou 10, caractérisé par un dispositif de traitement d'image (30) pour produire des images de phase (160) numérisées à partir d'interférences mesurées par chaque détecteur (16) se rapportant à chaque surface (90,91) qui doit être mesurée.

12. Dispositif selon la revendication 11, caractérisé en ce qu'un dispositif d'évaluation (40) sert à l'évaluation des images de phase (160).

13. Dispositif selon l'une quelconque des revendications 1 à 12, caractérisé en ce qu'un déphaseur (17) sert à changer la phase du faisceau de rayons lumineux (P) autour d'une valeur définie.

14. Dispositif selon l'une quelconque des revendications 1 à 13, caractérisé par un collecteur de rayons (10) disposé dans la trajectoire des rayons, entre la position du corps (9) et le dispositif détecteur (16).

15. Dispositif selon la revendication 14, caractérisé en ce que le collecteur de rayons (10) est formé d'un réseau de diffraction.

16. Dispositif selon l'une quelconque des revendications 1 à 15, caractérisé en ce qu'un réflecteur parabolique (7) est prévu pour produire un faisceau de rayons (P) parallèle à partir du rayon lumineux sorti de la source lumineuse (1).

17. Dispositif selon l'une quelconque des revendications 1 à 16, caractérisé en ce que la source lumineuse (1) est réalisée sous la forme d'un laser.

18. Dispositif selon l'une quelconque des revendications 13 à 17, caractérisé en ce que le déphaseur (17) comprend un composant de réglage piezo électrique pour déplacer le réseau de diffraction du séparateur de rayons (8).

19. Dispositif selon l'une quelconque des revendications 1 à 18, caractérisé par un dispositif de commande (60) pour commander le dispositif de positionnement (22, 19, 50) destiné au corps (9) qui doit être mesuré et au corps de référence (21).

20. Procédé pour mesurer deux surfaces opposées (90, 91), essentiellement planes d'une pastille semi-conductrice (9), où chaque surface (90, 91) est mesurée à l'aide d'interférence entre un faisceau de rayons lumineux (A, B) réfléchi sur la surface (90, 91) et envoyé à partir d'une source lumineuse (1) et un faisceau de rayons lumineux (P) allant vers la surface (90, 91) essentiellement de manière parallèle et envoyé à partir de la source lumineuse (1), et dans lequel
une source lumineuse est utilisée (1) pour mesurer les deux surfaces (90, 91) et le corps (9) est disposé à l'intérieur de la trajectoire de rayons de la source lumineuse (1) de sorte que les deux surfaces (90,91) qui doivent être mesurées sont accessibles simultanément à la mesure d'interférences.

21. Procédé selon la revendication 20, dans lequel, la pastille semi-conductrice (9) est disposée dans la trajectoire de rayons de sorte que les surfaces (90, 91) à mesurer sont dirigées essentiellement dans la direction verticale.

22. Procédé selon la revendication 20 ou 21 dans lequel, le rayon lumineux est partagé à partir de la source lumineuse (1) à l'aide d'un séparateur de faisceaux (8) en trois faisceaux de rayons partiels (A, B, P), avec pour effet que deux des faisceaux de rayons partiels (A, B) sont chacun déviés sur une des surfaces à mesurer (90, 91) et y sont réfléchis et le troisième faisceau de rayons partiel (P) est utilisé comme faisceau de référence en ce qui concerne la mesure interférentielle.

23. Procédé selon la revendication 22 dans lequel, les faisceaux de rayons partiels (A, B) incidents sur les surfaces à mesurer sont produits par pliage au niveau d'un réseau, d'où il résulte que le faisceau de rayon partiel (A) ayant un angle de diffraction positif est employé pour mesurer l'une des surfaces (90), et le faisceau de rayon partiel (B) ayant un angle de diffraction négatif est utilisé pour mesurer la surface (91) et ensuite le faisceau de rayons partiel ayant un angle de diffraction nul est utilisé comme faisceau de référence (P).

24. Procédé selon l'une quelconque des revendications 20 à 23 dans lequel, à partir de chaque surface (90, 91) qui doit être mesurée, plusieurs images d'interférences (160) déphasées sont produites.

25. Procédé selon la revendication 24 dans lequel les images de phase (160) sont numérisées.

26. Procédé selon l'une quelconque des revendications 20 à 25 dans lequel, à l'aide d'un déphaseur (17), la phase des faisceaux de rayons partiels (A, B, P) est déphasée au moment de la mesure autour d'un angle de phase défini pour produire des images de phase déphasées afin de déterminer l'élévation ou l'abaissement des surfaces à mesurer (90, 91).

27. Procédé selon l'une quelconque des revendications 24 à 26, dans lequel les images de phase (160) des deux surfaces (90, 91) sont soustraites l'une de l'autre afin de déterminer le parallélisme des surfaces (90, 91).

28. Procédé selon l'une quelconque des revendications 20 à 27, dans lequel une mesure d'étalonnage est réalisée, où un corps de référence (21) ayant au moins une surface (24) plane est amené à une position de mesure et la surface (24) plane est mesurée.

29. Procédé selon la revendication 28, dans lequel le corps de référence (21) est mis en rotation sur 180 degrés autour d'un axe parallèle à la surface (24) plane et cette même surface (24) est encore une fois mesurée.

30. Procédé selon l'une quelconque des revendications 20 à 29, dans lequel une source lumineuse (1) unique est utilisée.
